# EUROPEAN PATENT APPLICATION

(11) **EP 4 811 884 A1**
(43) Date of publication of application: **23.09.2026**
(21) Application number: 24924928.5
(22) Date of filing: 31.12.2024
(51) Int. Cl.: H04W 52/24, H04W 52/14, H04W 52/32, H04W 52/36, H04W 52/54, H04W 72/231, H04W 72/232

(54) **METHOD AND APPARATUS FOR CONTROLLING POWER IN ASYMMETRIC TRP SYSTEM**

(30) Priority: 16.02.2024 KR 20240022983
(71) Applicant: Hyundai Motor Company, Seoul 06797 (KR); Kia Corporation, Seoul 06797 (KR)
(72) Inventor: LEE, Jeong Su, Hwaseong-si, Gyeonggi-do 18280 (KR); HONG, Ui Hyun, Hwaseong-si, Gyeonggi-do 18280 (KR); SUH, Young Kil, Hwaseong-si, Gyeonggi-do 18280 (KR); HAHN, Gene Back, Hwaseong-si, Gyeonggi-do 18280 (KR)
(74) Representative: Isarpatent
(86) International application number: PCT/KR2024/021534
(87) International publication number: WO 2025/173904

(57) **Abstract**

Disclosed are a method and apparatus for controlling power in an asymmetric transmission and reception point (TRP) system. The method of a user equipment (UE) comprises the steps of: receiving, from a base station, downlink control information (DCI) including a first transmit power control (TPC) command field and a second TPC command field; determining a first power control adjustment state on the basis of a first value of the first TPC command field; determining a second power control adjustment state on the basis of a second value of the second TPC command field; performing first uplink (UL) communication with a first TRP by using first transmit power determined on the basis of the first power control adjustment state; and performing second UL communication with a second TRP by using second transmit power determined on the basis of the second power control adjustment state.

## Description

### [Technical Field]

The present disclosure relates to an improved communication technique, and more particularly, to a power control technique in a communication system supporting asymmetric transmission and reception points (TRPs).

### [Background Art]

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, multiple transmission and reception points (mTRP) may be introduced into a communication network (e.g., 5G communication network and/or 6G communication network). The mTRP may be geographically separated. A base station may perform communication with a terminal using the mTRP. mTRP technology may be used to solve a quality of service (QoS) degradation problem of a cell-edge terminal and/or an inter-cell interference problem. In an environment where a non-line-of-sight (NLOS) path is limited, the mTRP technology may be used to provide an additional communication path.

mTRP-based communication may be performed based on a coherent joint transmission (CJT) scheme or a non-CJT (NCJT) scheme. In the CJT scheme, the mTRP may perform cooperative communication based on a stable backhaul link, and the mTRP may provide synchronized communication services to the terminal. In the NCJT scheme, the mTRP may provide communication services to the terminal without cooperation. For example, in the NCJT scheme, the mTRP may perform operations such as scheduling operations, precoding matrix selection operations, and modulation and coding scheme (MCS) determination operations without cooperation.

In an asymmetric TRP system, a terminal may perform downlink (DL) communication with a single TRP (sTRP), and the terminal may perform uplink (UL) communication with multiple TRPs (mTRP). In this case, when UL communication with mTRP is performed using the same transmission power, power consumption of the terminal may increase, and interference caused by the UL communication may increase. Accordingly, methods for determining transmission power for addressing the above problem are required.

### [Disclosure]

### [Technical Problem]

The present disclosure is directed to providing a method and an apparatus for controlling power in a communication system supporting asymmetric TRPs.

### [Technical Solution]

A method of a user equipment (UE), according to exemplary embodiments of the present disclosure for achieving the above-described objective, may comprise: receiving, from a base station, downlink control information (DCI) including a first transmit power control (TPC) field and a second TPC field; determining a first power control adjustment state based on a first value of the first TPC field; determining a second power control adjustment state based on a second value of the second TPC field; performing first uplink (UL) communication with a first transmission and reception point (TRP) using a first transmission power determined based on the first power control adjustment state; and performing second UL communication with a second TRP using a second transmission power determined based on the second power control adjustment state.

The method may further comprise: transmitting, to the base station, information indicating whether the UE supports determining a power control adjustment state for each of the first TRP and the second TRP.

The first TPC field may be associated with a first transmission configuration indicator (TCI) state for the first TRP, and the second TPC field may be associated with a second TCI state for the second TRP.

The DCI may further include information indicating whether to enable or disable an accumulation operation of TPCs.

The first transmission power for the first TRP may be determined further based on a first nominal transmission power, the second transmission power for the second TRP may be determined further based on a second nominal transmission power to which a power offset is applied, and the power offset may not be applied to the first nominal transmission power.

The method may further comprise: receiving, from the base station, information on the power offset, wherein the power offset indicated by the base station may be applied to the second nominal transmission power.

The method may further comprise: performing a measurement operation for a reference signal received from the first TRP; and determining the power offset corresponding to a measurement result of the reference signal, wherein the power offset determined by the UE may be applied to the second nominal transmission power.

The method may further comprise: receiving, from the base station, a first p0 value and a second p0 value, wherein the first nominal transmission power for the first TRP may be determined based on the first p0 value, and the second nominal transmission power for the second TRP may be determined based on the second p0 value.

The method may further comprising: receiving, from the base station, a first alpha value and a second alpha value, wherein the first transmission power for the first TRP may be determined further based on the first alpha value, and the second transmission power for the second TRP may be determined further based on the second alpha value.

Downlink (DL) communication for the UE may be performed with a single TRP corresponding to the first TRP, UL communication for the UE may be performed with multiple TRPs including the first TRP and the second TRP, and a path loss considered to determine the first transmission power and the second transmission power may be a path loss between the UE and the first TRP.

A user equipment (UE), according to exemplary embodiments of the present disclosure for achieving the above-described objective, may comprise: at least one processor, wherein the at least one processor may cause the UE to perform: receiving, from a base station, downlink control information (DCI) including a first transmit power control (TPC) field and a second TPC field; determining a first power control adjustment state based on a first value of the first TPC field; determining a second power control adjustment state based on a second value of the second TPC field; performing first uplink (UL) communication with a first transmission and reception point (TRP) using a first transmission power determined based on the first power control adjustment state; and performing second UL communication with a second TRP using a second transmission power determined based on the second power control adjustment state.

The at least one processor may further cause the UE to perform: transmitting, to the base station, information indicating whether the UE supports determining a power control adjustment state for each of the first TRP and the second TRP.

The first TPC field may be associated with a first transmission configuration indicator (TCI) state for the first TRP, and the second TPC field may be associated with a second TCI state for the second TRP.

The DCI may further include information indicating whether to enable or disable an accumulation operation of TPCs.

The first transmission power for the first TRP may be determined further based on a first nominal transmission power, the second transmission power for the second TRP may be determined further based on a second nominal transmission power to which a power offset is applied, and the power offset may not be applied to the first nominal transmission power.

The at least one processor may further cause the UE to perform: receiving, from the base station, information on the power offset, wherein the power offset indicated by the base station may be applied to the second nominal transmission power.

The at least one processor may further cause the UE to perform: performing a measurement operation for a reference signal received from the first TRP; and determining the power offset corresponding to a measurement result of the reference signal, wherein the power offset determined by the UE may be applied to the second nominal transmission power.

The at least one processor may further cause the UE to perform: receiving, from the base station, a first p0 value and a second p0 value, wherein the first nominal transmission power for the first TRP may be determined based on the first p0 value, and the second nominal transmission power for the second TRP may be determined based on the second p0 value.

The at least one processor may further cause the UE to perform: receiving, from the base station, a first alpha value and a second alpha value, wherein the first transmission power for the first TRP may be determined further based on the first alpha value, and the second transmission power for the second TRP may be determined further based on the second alpha value.

Downlink (DL) communication for the UE may be performed with a single TRP corresponding to the first TRP, UL communication for the UE may be performed with multiple TRPs including the first TRP and the second TRP, and a path loss considered to determine the first transmission power and the second transmission power may be a path loss between the UE and the first TRP.

### [Advantageous Effects]

According to the present disclosure, in an asymmetric TRP system, a terminal can perform DL communication with sTRP, and the terminal may perform UL communication with mTRP. In UL communication with mTRP, the terminal can apply different parameters to determine UL transmission powers for the mTRP. In this case, a first UL transmission power for a first TRP among the mTRP can be determined differently from a second UL transmission power for a second TRP among the mTRP. The terminal can perform first UL communication with the first TRP using the first UL transmission power, and the terminal can perform second UL communication with the second TRP using the second UL transmission power. Accordingly, efficiency of power consumption in the terminal can be improved, and interference for UL communication can be efficiently controlled.

### [Description of Drawings]

FIG. 1 is a conceptual diagram illustrating exemplary embodiments of a communication system.
FIG. 2 is a block diagram illustrating exemplary embodiments of a communication node constituting a communication system.
FIG. 3 is a block diagram illustrating exemplary embodiments of communication nodes performing communication.
FIG. 4A is a block diagram illustrating exemplary embodiments of a transmission path.
FIG. 4B is a block diagram illustrating exemplary embodiments of a reception path.
FIG. 5 is a conceptual diagram illustrating exemplary embodiments of a system frame in a communication system.
FIG. 6 is a conceptual diagram illustrating exemplary embodiments of a subframe in a communication system.
FIG. 7 is a conceptual diagram illustrating exemplary embodiments of a slot in a communication system.
FIG. 8 is a conceptual diagram illustrating exemplary embodiments of a time-frequency resource in a communication system.
FIG. 9 is a conceptual diagram illustrating an exemplary embodiment of an asymmetric TRP system.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. In other words, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)).

In the present disclosure, 'configuration of an operation (e.g., transmission operation)' may refer to signaling of configuration information (e.g., information elements, parameters) required for the operation and/or information indicating to perform the operation. 'configuration of information elements (e.g., parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

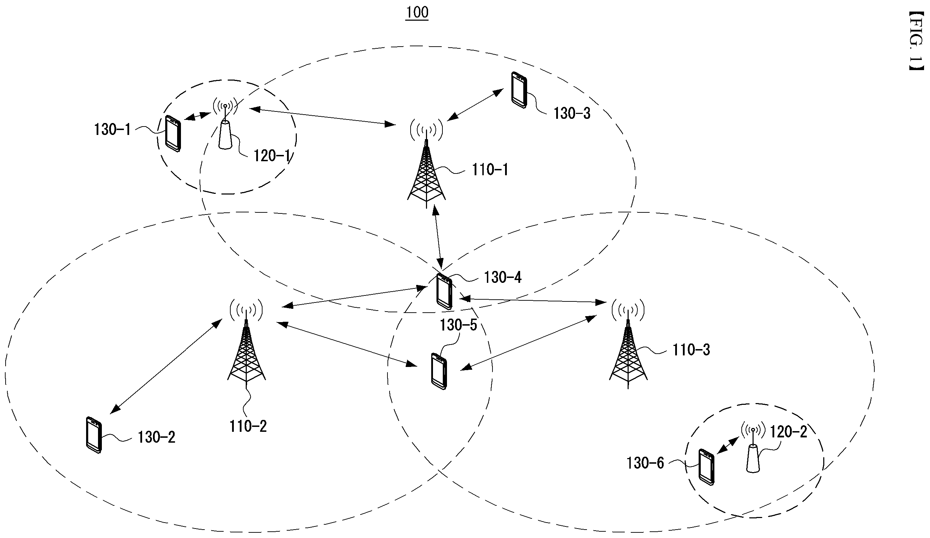

FIG. 1 is a conceptual diagram illustrating exemplary embodiments of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g., a serving gateway (S-GW), a packet data network (PDN) gateway (P-GW), a mobility management entity (MME). When the communication system 100 is a 5G communication (e.g., NR system), the core network may include an access and mobility management function (AMF), a user plane function (UPF), a session management function (SMF), and the like.

The plurality of communication nodes 110 to 130 may support communication protocols (e.g., LTE communication protocol, LTE-A communication protocol, NR communication protocol, etc.) specified in 3^{rd} generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

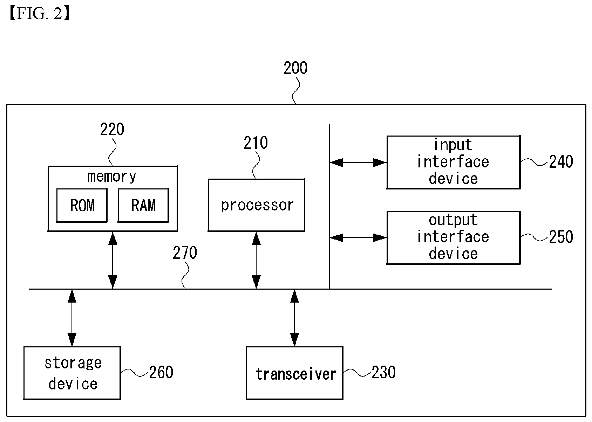

FIG. 2 is a block diagram illustrating exemplary embodiments of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g., a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g., device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

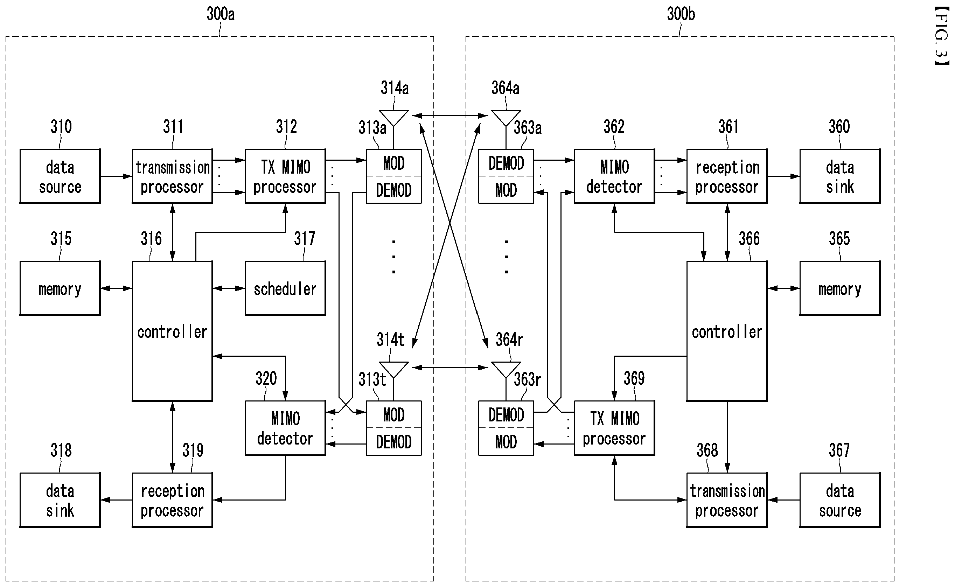

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating exemplary embodiments of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g., data unit) from a data source 310. The transmission processor 311 may receive control information from a controller 316. The control information may include at least one of system information, RRC configuration information (e.g., information configured by RRC signaling), MAC control information (e.g., MAC CE), or PHY control information (e.g., DCI, SCI).

The transmission processor 311 may generate data symbol(s) by performing processing operations (e.g., encoding operation, symbol mapping operation, etc.) on the data. The transmission processor 311 may generate control symbol(s) by performing processing operations (e.g., encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g., precoding operations) on the data symbol(s), control symbol(s), and/or synchronization/reference symbol(s). An output (e.g., symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g., analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g., filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g., de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g., data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g., precoding operations) on the data symbol(s), control symbol(s), and/or reference symbol(s). An output (e.g., symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g., analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g., filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g., de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

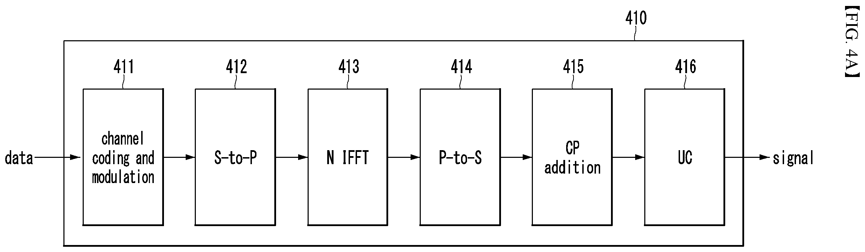

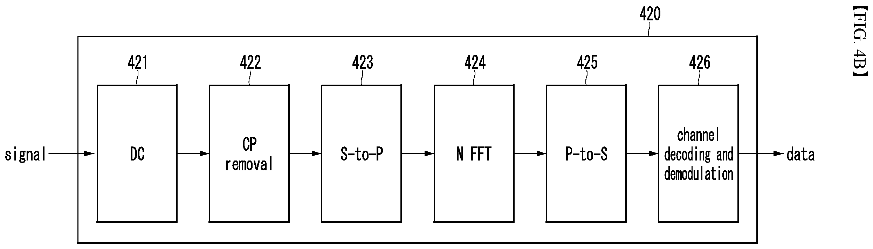

FIG. 4A is a block diagram illustrating exemplary embodiments of a transmission path, and FIG. 4B is a block diagram illustrating exemplary embodiments of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g., low-density parity check (LDPC) coding operation, polar coding operation, etc.) and a modulation operation (e.g., Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g., components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

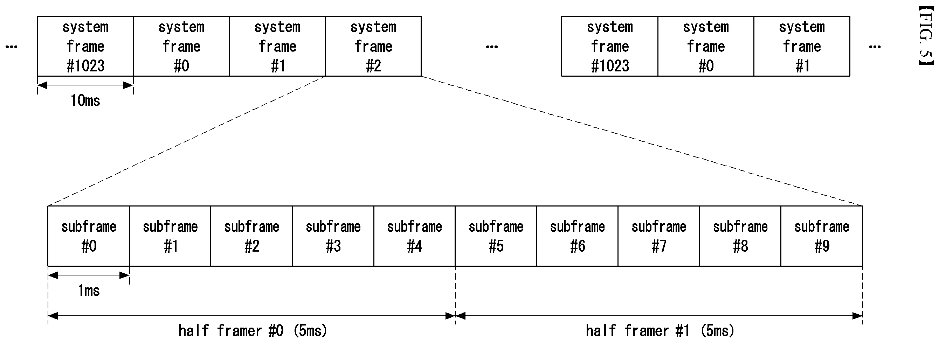

FIG. 5 is a conceptual diagram illustrating exemplary embodiments of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

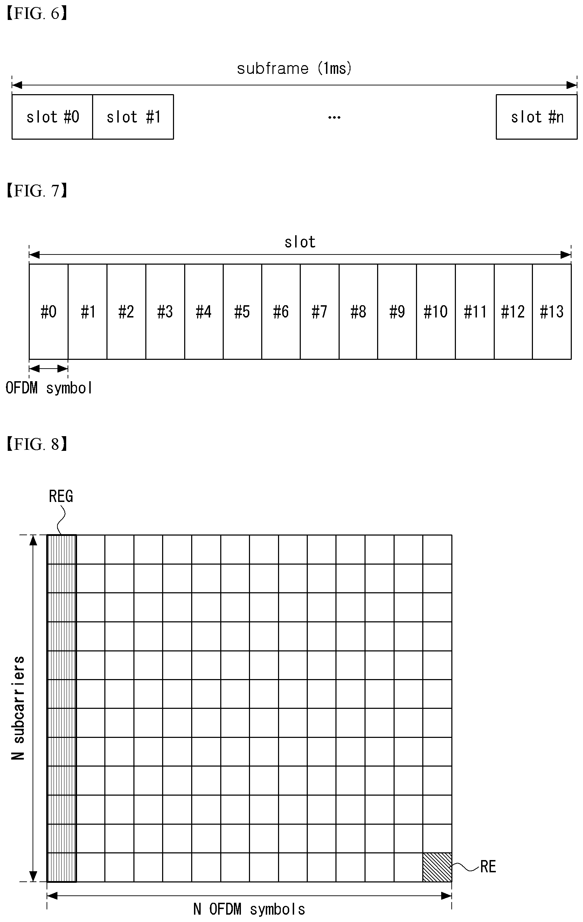

FIG. 6 is a conceptual diagram illustrating exemplary embodiments of a subframe in a communication system.

As shown in FIG. 6, one subframe may include n slots, and n may be a natural number. Accordingly, one subframe may consist of one or more slots.

FIG. 7 is a conceptual diagram illustrating exemplary embodiments of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

**[Table 1]**

| Subcarrier spacing | 15 kHz | 30 kHz | 60 kHz | 120 kHz | 240 kHz | 480 kHz |
|---|---|---|---|---|---|---|
| OFDM symbol length [µs] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g., µ = 0), the length of slot may be 1 ms. In this case, one system frame may include 10 slots. When a subcarrier spacing is 30 kHz (e.g., µ = 1), the length of slot may be 0.5 ms. In this case, one system frame may include 20 slots.

When a subcarrier spacing is 60 kHz (e.g., µ = 2), the length of slot may be 0.25 ms. In this case, one system frame may include 40 slots. When a subcarrier spacing is 120 kHz (e.g., µ = 3), the length of slot may be 0.125 ms. In this case, one system frame may include 80 slots. When a subcarrier spacing is 240 kHz (e.g., µ = 4), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g., RRC signaling). Information indicating a semi-static slot format may be included in system information, and the semi-static slot format may be configured cell-specifically. Additionally, a semi-static slot format may be further configured for each terminal through terminal-specific higher-layer signaling (e.g., RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g., slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

FIG. 8 is a conceptual diagram illustrating exemplary embodiments of a time-frequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g., a common RB grid) based on a reference frequency (e.g., point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g., scheduling information) of the PDSCH to a terminal through a PDCCH. The terminal may obtain the configuration information of the PDSCH by receiving the PDCCH (e.g., Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g., DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g., Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g., in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, a communication system (e.g., NR communication system, 5G communication system, or 6G communication system) may support use scenarios such as enhanced Mobile BroadBand (eMBB), Ultra Reliable Low Latency Communication (URLLC), and massive Machine Type Communication (mMTC). The communication system (e.g., communication network) may support a transmission and reception point (TRP) technology (e.g., multi-TRP (mTRP) technology and/or single TRP (sTRP) technology). The communication system supporting the TRP technology may be referred to as a TRP system (e.g., mTRP system and/or sTRP system). In the present disclosure, 'TRP' may have a meaning including 'sTRP' and/or 'mTRP', and 'TRP' may refer to 'sTRP' or 'mTRP' depending on a context. A TRP may refer to an antenna set, antenna group, and/or antenna array. A TRP may be associated with a CORESET and/or a beam (e.g., beam group).

The mTRP technology may fall under a category of MIMO technology. The mTRP may have characteristics (e.g., cell-level characteristics) of macro cells, small cells, pico cells, and/or femto cells. The mTRP may perform data transmission for a terminal. In a case where a channel (e.g., link) with a non-uniform channel condition exists due to an obstacle and/or interference, the mTRP may mitigate the effect caused by the obstacle and/or interference. The mTRP may improve a data transmission rate for a terminal located in a cell edge.

mTRP-based communication may be performed based on a coherent joint transmission (CJT) scheme or a non-coherent joint transmission (NCJT) scheme. In the CJT scheme, a base station may be aware of channel information between each TRP and a terminal and may perform a preprocessing operation for data based on the channel information. In this case, an overhead caused by a transmission procedure of the channel information may increase, and synchronization constraints among the TRPs may occur. In the NCJT scheme, a base station may not need to be aware of channel information between each TRP and a terminal. The mTRP may transmit data to the terminal without performing a preprocessing operation such as phase compensation. The complexity of the NCJT scheme may be lower than the complexity of the CJT scheme.

NCJT-based mTRP communication may be performed based on a single-DCI scheme or a multi-DCI scheme. In the single-DCI scheme, PDSCHs transmitted by mTRP may be scheduled by a single DCI. The single DCI may be transmitted by one TRP of the mTRP. In the multi-DCI scheme, a PDSCH transmitted by each TRP may be scheduled by a DCI transmitted by the corresponding TRP. For example, a first PDSCH transmitted by a first TRP may be scheduled by a first DCI transmitted by the first TRP, and a second PDSCH transmitted by a second TRP may be scheduled by a second DCI transmitted by the second TRP. In other words, a plurality of PDSCHs may be scheduled using a plurality of DCIs.

In the single-DCI scheme, a terminal may expect to receive PDSCHs transmitted by different TRPs through different layers while using the same time and frequency resource. Alternatively, the terminal may expect to receive PDSCHs transmitted by different TRPs through different time resources (e.g., different time regions) while using the same frequency resource and the same layer. Alternatively, the terminal may expect to receive PDSCHs transmitted by different TRPs through different frequency resources (e.g., different frequency regions) while using the same time resource and the same layer.

In the multi-DCI scheme, PDSCH scheduling for each TRP may be performed by an individual DCI. PDSCHs scheduled by a plurality of DCIs may be fully overlapped or partially overlapped. Alternatively, PDSCHs scheduled by a plurality of DCIs may not be overlapped. In both the single-DCI scheme and the multi-DCI scheme, the DCI may include transmission configuration indicator (TCI) state information for PDSCH(s).

An indication/configuration of a TCI state for a terminal may be interpreted as an indication/configuration of a beam (e.g., a transmission beam and/or a reception beam). In other words, the TCI state may have a meaning corresponding to the beam. From the perspective of downlink (DL) communication, configuration of a TCI state may refer to configuration of a quasi-co-location (QCL). From the perspective of uplink (UL) communication, configuration of a TCI state may refer to configuration of a spatial filter. A unified TCI state may indicate (e.g., configure) a common beam regardless of DL communication and UL communication. Alternatively, a unified TCI state may indicate (e.g., configure) a common beam for each of DL communication and UL communication. The unified TCI may be referred to as 'UTCI'.

To enhance the reliability and/or robustness of mTRP communication, improvements such as PDCCH enhancements may be applied. Deployment scenarios for PDCCH enhancement may be classified into a single frequency network (SFN) and a non-SFN.

In the SFN scheme, different TRPs or different panels may transmit the same PDCCH using the same resource (e.g., the same time resource, the same frequency resource, and/or the same spatial resource). In other words, all TRPs or all panels may transmit the PDCCH using the same DMRS configuration, the same DMRS position, and/or the same DMRS sequence. In this case, from the reception perspective for the TRPs or panels, TCI states may be implicitly configured differently. The above-described exemplary embodiment may be performed based on a plurality of TCI states of a CORESET. Synchronization constraints for an ideal backhaul or a near-ideal backhaul among the TRPs may exist.

In the NSFN scheme, PDCCHs generated by the respective TRPs may be multiplexed in the time domain and/or the frequency domain, and the multiplexed PDCCHs may be transmitted to the terminal. This scheme may be an mTRP-based PDCCH repetition scheme. In the NSFN scheme, the number of encoded bits equal to the number of bits delivered through one PDCCH generated in each TRP may be divided among the TRPs, and the TRP-specific bits (e.g., encoded bits) may be transmitted through a different PDCCH candidate for each TRP. This scheme may correspond to an sTRP-based PDCCH transmission scheme.

In the mTRP-based PDCCH repetition scheme, a PDCCH may be duplicated according to the number of TRPs, and the PDCCHs may be transmitted in the same search spaces

(e.g., search spaces having the same index) within different search space sets, each having the same number of PDCCH candidates. In this case, the search space sets may exist within the same CORESET or within different CORESETs. Since one TCI state may be associated with each CORESET, when PDCCHs are transmitted from different search spaces within the same CORESET, only one TCI state for the PDCCHs transmitted from the different search spaces may be indicated (e.g., configured). In this case, the terminal may receive one PDCCH from one TRP at a specific time.

When the PDCCHs are transmitted from the same search spaces within different CORESETs, the terminal may implicitly expect to receive the PDCCH from sTRP or mTRP depending on the number of TCI states (e.g., TCI states indicated or configured by the base station). In this case, a single PDCCH may be divided into as many PDCCHs as the number of TRPs, and the divided PDCCHs may be transmitted in different PDCCH candidates. In this case, an aggregation level and a combined aggregation level may be the same. In the above exemplary embodiment, the PDCCH candidates may be allocated to different CORESETs. A payload size for a combination of finally distributed PDCCHs may be the same as a payload size of a PDCCH transmitted from sTRP. Accordingly, in terms of decoding complexity, the sTRP-based PDCCH transmission scheme may be more advantageous than the mTRP-based PDCCH repetition scheme.

A terminal may perform mTRP communication or sTRP communication with a base station. The mTRP communication between the terminal and the base station may be performed via mTRP associated with the base station. The sTRP communication between the terminal and the base station may be performed via sTRP associated with the base station. The mTRP communication may be referred to as first TRP communication, and the sTRP communication may be referred to as second TRP communication. Alternatively, the mTRP communication may be referred to as second TRP communication, and the sTRP communication may be referred to as first TRP communication. The expression 'A terminal performs first TRP communication with a base station' may mean that the terminal performs mTRP communication or sTRP communication with the base station via one or more TRPs associated with the base station. The expression "A terminal performs second TRP communication with a base station" may mean that "the terminal performs sTRP communication or mTRP communication with the base station via one or more TRPs associated with the base station".

In a communication system, a united TCI framework may be supported. A base station may transmit information of a pool (e.g., pool list) of TCI states to a terminal using RRC signaling. The terminal may receive the information of the pool (e.g., pool list) of TCI states through the RRC signaling of the base station. The base station may configure type information of TCI states for the terminal. The type information may indicate a joint DL/UL beam indication or a separate DL/UL beam indication. The joint DL/UL beam indication may be referred to as 'joint indication' or 'joint type'. The separate DL/UL beam indication may be referred to as 'separate indication' or 'separate type'.

When the joint type (e.g., joint indication) is configured, a TCI state (e.g., one TCI state) for DL and UL may be configured. In other words, a DL TCI state configuration and a UL TCI state configuration may be the same. The terminal may expect that a TCI state indicated by an information element included in PDSCH configuration information is applied to both DL (e.g., DL signal/channel) and UL (e.g., UL signal/channel). The term 'signal/channel' may refer to a signal and/or a channel. When the separate type (e.g., separate indication) is configured, TCI states for DL and UL, respectively, may be configured. In other words, a DL TCI state configuration may be distinguished from a UL TCI state configuration. The terminal may expect that a UL TCI state indicated by an information element included in UL BWP configuration information is applied to UL (e.g., UL signal/channel). A UL signal/channel may include PUSCH, PUCCH, and/or SRS.

After the pool (e.g., pool list) of TCI states is configured (e.g., indicated) by RRC signaling, the base station may indicate TCI state(s) (e.g., application of the TCI state(s)) using DCI (e.g., DCI signaling). Due to the constraint of the DCI size (e.g., bits of DCI fields), the base station may preferentially activate candidate TCI state(s) using MAC signaling (e.g., MAC CE signaling). In other words, candidate TCI states, up to a certain number (e.g., a maximum number) that can be indicated or configured through DCI, may be preferentially activated by a MAC CE.

For the activated candidate TCI state(s), DCI may include a codepoint corresponding to a single TCI state or two TCI states according to a TCI state type (e.g., joint type or separate type). When the joint type is configured, a codepoint corresponding to a single TCI state may be delivered by the DCI. When the separate type is configured, a codepoint corresponding to two TCI states may be delivered by the DCI.

The unified TCI framework may be extended to support multiple TRPs. Up to two TRPs may be supported. A base station may configure up to 128 TCI states for a TCI state pool through RRC configuration. The base station may activate up to 32 TCI states corresponding to 8 codepoints using a MAC CE. The base station may indicate up to 4 TCI states for two TRPs using DCI.

To identify a DL channel state, a synchronization signal block (SSB) and/or a CSI-RS may be used. SSB may be periodically transmitted for time synchronization between a terminal and a base station. SSB may be transmitted even without a transmission request (e.g., transmission demand). Accordingly, transmission overhead of SSB may be lower than transmission overhead of CSI-RS. SSB may be transmitted within a specific frequency region. To identify a channel state for a frequency region to be measured by the terminal and/or an entire frequency region supported by a system, SSB may not be used due to a constraint on a transmission frequency region. In channel state measurement, each of SSB and CSI-RS may have advantages and disadvantages. Depending on a specific environment and/or a specific condition, SSB or CSI-RS may be used for measurement (e.g., identification) of a DL channel state.

Channel state reporting (e.g., CSI reporting) may be classified into three types. For example, channel state reporting may be classified into periodic channel state reporting, semi-persistent channel state reporting, and aperiodic channel state reporting. In periodic channel state reporting (e.g., periodic CSI reporting), a terminal may transmit a channel state report to a base station according to a periodicity configured by the base station. In semi-persistent channel state reporting (e.g., semi-persistent CSI reporting), a terminal may transmit a channel state report to a base station during a predetermined duration. In aperiodic channel state reporting (e.g., aperiodic CSI reporting), a terminal may transmit a channel state report to a base station according to a request (e.g., CSI request) from the base station. In other words, the channel state report may be intermittently transmitted.

The channel state report may include precoding matrix indicator (PMI), rank indicator (RI), layer indicator (LI), channel quality indicator (CQI), CSI reference resource indicator (CRI), SS/PBCH block resource indicator (SSBRI), reference signal received power (RSRP), and/or signal-to-interference-plus-noise ratio (SINR). The channel state report may include a capability index. The channel state report may include up to eight information items. CSI-RS may be used for measurement of a channel state. The base station may transmit, to the terminal, an RRC message including resource information (e.g., *CSI-ResourceConfig*, *CSI-MeasConfig*) for CSI-RS. The terminal may receive the RRC message from the base station, and may obtain the resource information for CSI-RS included in the RRC message.

The resource information for CSI-RS may include at least one of a time resource through which CSI-RS is transmitted, a frequency resource through which CSI-RS is transmitted, a transmission periodicity of CSI-RS, or a resource type (e.g., a periodic type, a semi-persistent type, an aperiodic type) of CSI-RS. In addition, the RRC message may include configuration information (e.g., *CSI-ReportConfig*) for CSI reporting. A resource type of CSI-RS and a type of CSI reporting (e.g., CSI measurement reporting) may be independently configured. For example, when aperiodic CSI reporting is required, the terminal may perform measurements on all CSI-RS resources regardless of whether each resource is a periodic CSI-RS resource, a semi-persistent CSI-RS resource, or an aperiodic CSI-RS resource, and may transmit, to the base station, an aperiodic CSI report including measurement results. As another example, when periodic CSI reporting is required, the terminal may perform measurements on periodic CSI-RS resources, and may transmit, to the base station, periodic CSI reports including measurement results. As still another example, when semi-persistent CSI reporting is required, the terminal may perform measurements on periodic CSI-RS resources and/or semi-persistent CSI-RS resources, and may transmit, to the base station, a semi-persistent aperiodic CSI report including measurement results.

Configuration of CSI-RS resources may have a hierarchical structure. In other words, CSI-RS resources may be hierarchically configured. To indicate a minimum unit for obtaining channel information, a set of RE(s) having a specific pattern in the time domain and the frequency domain may be defined as a resource. To indicate (e.g., configure) a set of resources collectively, a resource set may be defined. Separate IDs may be allocated to distinguish each resource and each resource set. Different resource sets may include different resources. Alternatively, different resource sets may include the same resource(s). To flexibly utilize resources and resource sets, one group (e.g., a resource set list) including resource sets may be configured, and the one group may be defined based on resource configuration information (e.g., *CSI-ResourceConfig*). A specific ID for a set of resource sets (e.g., a resource set list) may be configured.

A set of CSI-RS resource sets may be defined as a 'CSI-RS resource set list' or a 'set list'. In the present disclosure, periodic may be referred to as 'P', semi-persistent may be referred to as 'SP', and aperiodic may be referred to as 'AP'. In other words, periodic CSI-RS, semi-persistent CSI-RS, and aperiodic CSI-RS may be respectively referred to as P CSI-RS, SP CSI-RS, and AP CSI-RS, and periodic CSI report, semi-persistent CSI report, and aperiodic CSI report may be respectively referred to as P CSI report, SP CSI report, and AP CSI report. CSI-RS resource(s) according to a type (e.g., P, SP, AP) may be configured in units of CSI-RS resource set lists. CSI-RS resource set(s) and/or CSI-RS resource(s) belonging to the same CSI-RS resource set list may be interpreted as having the same type. Since a CSI-RS resource set list is configured according to a type, a CSI report may be requested or transmitted for each CSI-RS resource set list. Configuration of CSI-RS resources may have a hierarchical structure in the order of 'CSI-RS resource → CSI-RS resource set → CSI-RS resource set list'. One or more CSI-RS resources may belong to a CSI-RS resource set, and one or more CSI-RS resource sets may belong to a CSI-RS resource set list.

Configuration information of CSI reporting (i.e., CSI report configuration information) may be transmitted to a terminal together with configuration information of CSI-RS resources. Depending on a purpose of CSI measurement (e.g., channel measurement, interference measurement), configuration information (e.g., allocation information) for different CSI-RS resource set lists may be transmitted to the terminal. Configuration information of CSI reporting may include all information required for the terminal to transmit CSI reports. For example, the configuration information of CSI reporting may include at least one of a CSI reporting type (e.g., P, SP, AP), a time resource for which CSI measurement is required, a frequency resource for which CSI measurement is required, or types of information included in CSI reports. A channel through which a CSI report is transmitted may vary depending on the size of the CSI report. For example, a P CSI report may be transmitted through a PUCCH. An SP CSI report may be transmitted through a PUCCH or a PUSCH. An AP CSI report may be transmitted through a PUSCH. The size of an AP CSI report may be greater than that of an SP CSI report, and the size of an SP CSI report may be greater than that of a P CSI report.

A CSI reporting procedure for each type may be performed as follows. A base station may transmit, to a terminal, an RRC message including CSI measurement configuration information, CSI-RS resource configuration information, and/or CSI report configuration information. The terminal may obtain the CSI measurement configuration information, the CSI-RS resource configuration information, and/or the CSI report configuration information from the base station. In a P CSI reporting procedure, the terminal may measure a DL channel based on a P CSI-RS without additional triggering signaling (e.g., triggering signal), and may transmit, to the base station, a CSI report including a measurement result according to a CSI reporting periodicity configured by RRC signaling (e.g., an RRC message).

In an SP CSI reporting procedure, a base station may transmit, to a terminal, information (e.g., MAC CE) indicating activation of SP CSI measurement/reporting. When the SP CSI measurement/reporting is activated, the terminal may measure a DL channel based on a P CSI-RS, and may transmit, to the base station, a CSI report including a measurement result according to a CSI reporting periodicity configured by RRC signaling (e.g., an RRC message). Transmission of the CSI report may continue until information (e.g., MAC CE) indicating deactivation of SP CSI measurement/reporting is received from the base station. Activation signaling and/or deactivation signaling for an SP CSI measurement/reporting procedure may be required. During an interval between the activation signaling and the deactivation signaling, the terminal may measure a DL channel based on an SP CSI-RS, and may transmit, to the base station, a CSI report including measurement results.

In an AP CSI reporting procedure, a base station may transmit, to a terminal, a signaling message (e.g., DCI or MAC CE) for triggering AP CSI measurement/reporting. The signaling message may indicate triggering of one CSI report. The terminal may receive the signaling message from the base station, and may determine that AP CSI measurement/reporting is triggered based on the signaling message. An AP CSI-RS resource measured by the terminal may be an AP CSI-RS resource transmitted after N slots from a slot in which the signaling message for triggering AP CSI measurement/reporting is received, and the AP CSI report may be transmitted after M slots from the slot in which the signaling message for triggering AP CSI measurement/reporting is received. Each of N and M may be a natural number. Information on N indicating the AP CSI-RS resource and/or information on M indicating timing of the AP CSI report may be transmitted to the terminal through RRC signaling. Information on N indicating the AP CSI-RS resource and/or information on M indicating timing of the AP CSI report may be transmitted to the terminal together with the CSI measurement configuration information, CSI-RS resource configuration information, and/or CSI report configuration information.

A terminal may individually perform data transmission using a plurality of panels. In other words, the terminal may perform data transmission independently using each of the plurality of panels. The terminal may transmit, to a base station, information required for data transmission for each panel. The base station may obtain, from the terminal, the information required for data transmission for each panel. One of the pieces of information required for data transmission for each panel may be power headroom information (e.g., a power headroom report (PHR)). The power headroom information may indicate remaining power excluding power used by the terminal for data transmission. The power headroom information may be configured in units of subframes. Transmission power for data may correspond to a predicted value (e.g., predicted transmission power), not a value actually used for transmission (e.g., actual transmission power). The power used for actual data transmission cannot exceed maximum transmission power supported by the terminal. The predicted transmission power may exceed the maximum transmission power supported by the terminal. The power headroom information reported by the terminal may have a positive value or a negative value.

A PHR may be delivered from a terminal to a base station through the MAC layer. In other words, the PHR may be included in a MAC CE. A power headroom (PH) index (e.g., a PH value) may be defined in a table (e.g., mapping information between PH indexes and transmission power ranges) in the technical specifications. In the table, a PH index may be mapped to each transmission power range. For example, a PH index may indicate PH 0, and PH 0 may be mapped to -23dB ≤ PH < -22dB in the table. The size of a PHR field included in the MAC CE may vary depending on the number of PH indexes. The terminal may transmit a PHR for each panel. A path loss associated with the PHR may be determined based on a reference signal (RS) associated with beam configuration (e.g., a TCI state and/or QCL). Whether PHR transmission for each panel is supported may be determined based on a capability of the terminal. For example, a certain terminal may support PHR transmission for each panel, and another terminal may not support PHR transmission for each panel. The terminal may report, to the base station, information on whether PHR transmission for each panel is supported. As a parameter indicating whether PHR transmission for each panel is supported, a parameter (e.g., *twoPHRmode*) indicating whether PHR transmission for mTRP is supported may be used. In an mTRP environment (e.g., an mTRP system), methods for improving uplink communication performance are required.

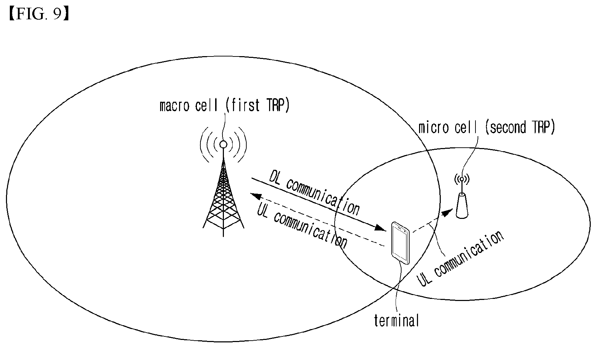

FIG. 9 is a conceptual diagram illustrating an exemplary embodiment of an asymmetric TRP system.

As shown in FIG. 9, a macro cell (e.g., a macro TRP, a first TRP) may cover a relatively large area, and a micro cell (e.g., a micro TRP, a second TRP) may cover a relatively small area. DL traffic (e.g., traffic for DL data transmission) may be greater than UL traffic (e.g., traffic for UL data transmission). Accordingly, transmission resources may be preferentially configured for DL transmission. The transmission power of a base station may be greater than the transmission power of a terminal, and DL coverage may be wider than UL coverage.

A micro cell (e.g., a second TRP) adjacent to the terminal may be present. Power efficiency of UL communication with the adjacent micro cell may be better than that of UL communication with the macro cell (e.g., the first TRP) connected to the terminal. A TRP may be an entity that transmits and receives data with the terminal. A TRP and a cell may be interchangeably used. A TRP may be used with the same meaning as a cell depending on context. A cell may be used with the same meaning as a TRP depending on context. A specific TRP (e.g., a serving cell) may perform a control function for another TRP (e.g., a TRP controlled by the specific TRP). The specific TRP may perform a data scheduling function.

The terminal may perform UL communication with the micro cell while performing DL communication with the macro cell. When channel reciprocity between a DL channel for the macro cell and a UL channel for the micro cell is established, the terminal may determine (e.g., configure) transmission power for the UL channel of the micro cell based on path loss determined based on an RS received from the macro cell. Alternatively, in an asymmetric TRP system, a terminal may perform DL communication with one TRP (e.g., a macro cell), and may perform UL communication with a plurality of TRPs (e.g., the macro cell and a micro cell). In the above-described asymmetric TRP system, the terminal may determine (e.g., configure) transmission power for each UL channel of the macro cell and the micro cell based on path loss determined based on an RS received from the macro cell. In this case, UL transmission power for the micro cell may be set to a high level. In other words, since the UL transmission power for the micro cell is determined based on a channel state between the macro cell and the terminal, rather than a channel state between the micro cell and the terminal, the UL transmission power for the micro cell may be set to a high level. Even though UL communication (e.g., transmission of a channel and/or a signal) with the micro cell is possible with low transmission power, the UL communication with the micro cell may be performed with high transmission power. Accordingly, power consumption of the terminal may increase unnecessarily, and UL communication with high transmission power may cause interference to other terminals.

To solve the above-described problem, an additional method for configuring UL transmission power in an asymmetric TRP system may be required. The asymmetric TRP system may include mTRP, wherein sTRP among the mTRP performs DL communication and the mTRP perform UL communication. The sTRP performing DL communication may be referred to as a DL sTRP. The mTRP performing UL communication may be referred to as UL mTRP. A method of power control (e.g., power configuration, power determination) for UL communication in the asymmetric TRP system is described. In the present disclosure, a power control method for a PUSCH is described, but the power control method for the PUSCH may be applied to another UL channel and/or another UL signal. In the asymmetric TRP system, transmission power for UL mTRP may be determined based on path loss derived based on a reference signal received from sTRP. In other words, in the exemplary embodiment of FIG. 9, first transmission power for a first TRP may be determined based on a measurement result for a reference signal received from the first TRP, and second transmission power for a second TRP may be determined based on the measurement result for the reference signal received from the first TRP. An additional path loss correction method for each TRP of UL mTRP may be required.

The transmission power of a PUSCH may be determined based on Equation 1 below. For example, in the exemplary embodiment of FIG. 9, a first transmission power for the first TRP may be determined based on Equation 1 below. $\begin{matrix}{P}_{PUSCH , b , f , c} \left(i, j, {q}_{d}, l\right) = \\ min \left\{\begin{matrix}{P}_{CMAX , f , c} \left(i\right) \\ {P}_{O_PUSCH , b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ {PL}_{b , f , c} \left({q}_{d}\right) + {Δ}_{TF , b , f , c} \left(i\right) + {f}_{b , f , c} \left(i, l\right)\end{matrix}\right\} \\ \left[dBm\right]\end{matrix}$

A PUSCH occasion i may be defined as a slot index within a system frame number (SFN). µ may indicate a subcarrier spacing (SCS) for the PUSCH. s may indicate a start symbol of the PUSCH. *f* may indicate a carrier of a serving cell c. The PUSCH may be configured over a duration having a length *L* from the start symbol s. *j* may be used as an index for identifying a parameter set (e.g., parameter group). *l* may be used as an index for distinguishing power control adjustment states. b may be used to indicate an active BWP through which the PUSCH is transmitted. *q_{d}* may indicate a resource index of an RS for path loss measurement.

In the present disclosure, methods for determining transmission powers suitable for an asymmetric TRP system are proposed. In particular, methods for enhancing parameters in Equation 1 used for transmission power determination are proposed. In the asymmetric TRP system illustrated in FIG. 9, parameter(s) for determining a transmission power for the second TRP may be configured differently from parameter(s) for determining a transmission power for the first TRP. One proposal or a combination of two or more proposals among the proposals of the present disclosure may be applied to determine transmission powers.

### 1. Case #1: nominal UE transmission power (e.g., P_{O_PUSCH,b,f,c}(j)) and alpha (e.g., α_{b,f,c}(j))

In Equation 1, a transmission power *P_{PUSCH,b,f,c}*(*i,j,q_{d},l*) may be determined based on a nominal UE transmission power, alpha (e.g., alpha value), and the like. The nominal UE transmission power may be referred to as nominal transmission power for convenience. Parameters for configuring the transmission power may be aggregated (e.g., grouped), and a signaling scheme and/or detailed values of a parameter set (e.g., a parameter group) may vary according to a purpose of the parameter set (e.g., parameters belonging to the parameter set). A parameter set may be distinguished by a specific index (e.g., j). In the present disclosure, a specific index (e.g., j) used to distinguish a parameter set may be referred to as a set index. A parameter set corresponding to j = 0 may include configuration values required for transmission of Msg3 or MsgA in an initial access procedure. A parameter set corresponding to j = 1 may include configuration values required for grant-free PUSCH transmission. A parameter set corresponding to j ≥ 2 may include configuration values required for grant-based PUSCH transmission.

The methods proposed in the present disclosure may be applied to an asymmetric TRP system. In the present disclosure, a parameter set (e.g., parameter(s)) distinguishable by a set index is described. A nominal UE transmission power (e.g., a nominal transmission power) may be a sum of a cell-specific parameter *P_{O_NOMINAL,PUSCH,f,c}*(*j*) and a UE-specific parameter *P_{O_UE_PUSCH,b,f,c}*(*j*)*.* A base station may configure (e.g., indicate) *P_{O_NOMINAL,PUSCH,f,c}*(*j*) and/or *P_{O_UE_PUSCH,b,f,c}*(*j*) for a terminal through signaling. The terminal may identify *P_{O_NOMINAL,PUSCH,f,c}*(*j*) and/or *P_{O_UE_PUSCH,b,f,c}*(*j*) through signaling from the base station. Alternatively, the terminal may determine *P_{O_NOMINAL,PUSCH,f,c}*(*j*) and/or *P_{O_UE_PUSCH,b,f,c}*(*j*) based on certain information. In the present disclosure, *P_{O_NOMINAL,PUSCH,f,c}*(*j*) may be referred to as a cell-specific nominal UE transmission power (e.g., a cell-specific nominal transmission power), and *P*_{*O*_*UE*_*PUSCH,b,f,c*}(*j*) may be referred to as a UE-specific nominal UE transmission power (e.g., a UE-specific nominal transmission power).

### 1-A. Method #1

When a base station does not configure (e.g., indicate) p0 (e.g., *p0-NominalWithGrant*) for grant-based UL transmission for a terminal, the terminal may determine a cell-specific nominal UE transmission power based on a Msg3 delta preamble (e.g., *msg3-DeltaPreamble*) and an additional correction value. The base station may transmit information on the additional correction value to the terminal through signaling. The terminal may acquire the information on the additional correction value through signaling from the base station. The additional correction value may correspond to a power offset. In the asymmetric TRP system illustrated in FIG. 9, the additional correction value may be used to determine a UL transmission power for the second TRP, and the additional correction value may not be used to determine a UL transmission power for the first TRP. The terminal may determine a UL transmission power (e.g., a transmission power for grant-based UL transmission) based on the cell-specific nominal UE transmission power. *p0-NominalWithGrant* and/or *msg3-DeltaPreamble* may be included in PUSCH configuration common information (e.g., *PUSCH-ConfigCommon*).

In the asymmetric TRP system illustrated in FIG. 9, the terminal may access the macro cell (e.g., the macro TRP, the first TRP). Accordingly, a transmission power used by the terminal to transmit Msg3 or MsgA may be greater than a transmission power required for UL communication with the micro cell (e.g., the micro TRP, the second TRP). Accordingly, the base station may transmit information on the power offset (e.g., the additional correction value) to the terminal through signaling in order to control the UL transmission power for the micro cell. The terminal may acquire information on the power offset through signaling from the base station. The power offset may vary depending on the quality (e.g., RSRP, reference signal received quality (RSRQ), SINR, and the like) of a reference signal (e.g., SSB, CSI-RS, and the like) received from a DL TRP (e.g., a TRP performing DL communication). The base station may transmit information on a power offset for each quality range (e.g., an RSRP range, an RSRP threshold) to the terminal through signaling. The terminal may acquire the information on the power offset for each quality range through signaling from the base station.

Based on a conventional method, when a base station does not configure p0 (e.g., *p0-NominalWithGrant*) for grant-based UL transmission for a terminal, the terminal may determine a cell-specific nominal UE transmission power based on Equation 2 or Equation 3 below. ${P}_{O _ NOMINAL , PUSCH , f , c} \left(0\right) = {P}_{O _ PRE} + {Δ}_{PREAMBLE , Msg 3}$ ${P}_{O _ NOMINAL , PUSCH , f , c} \left(0\right) = {P}_{O _ PRE} + {Δ}_{MsgA _ PUSCH}$

Based on the methods proposed in the present disclosure, when a base station does not configure p0 (e.g., *p0-NominalWithGrant*) for grant-based UL transmission of a terminal, the terminal may determine a cell-specific nominal UE transmission power based on Equation 4 below or Equation 5 below. ${P}_{O _ NOMINAL , PUSCH , f , c} \left(0\right) = {P}_{O _ PRE} + {Δ}_{PREAMBLE , Msg 3} + {δ}_{offset}$ ${P}_{O _ NOMINAL , PUSCH , f , c} \left(0\right) = {P}_{O _ PRE} + {Δ}_{MsgA _ PUSCH} + {δ}_{offset}$

In Equation 4 and/or Equation 5, *δ_{offset}* may be a power offset (e.g., an additional correction value). The power offset may be indicated (e.g., configured) by the base station. Alternatively, the power offset may be determined by the terminal. The power offset may vary depending on RSRP (e.g., an RSRP range). For example, the base station may transmit an RSRP range and a power offset associated with the RSRP range to the terminal through signaling (e.g., RRC signaling). The terminal may receive the RSRP range and the power offset associated with the RSRP range through signaling from the base station. The terminal may identify an RSRP range to which an RSRP corresponding to a measurement result of a reference signal received from the macro cell (e.g., the macro TRP, the first TRP) belongs, and may identify a power offset associated with the identified RSRP range. Quality information other than RSRP (e.g., RSRQ, SINR, and the like) may be used instead of RSRP.

In the exemplary embodiment of FIG. 9, the power offset may be used to determine a cell-specific nominal UE transmission power for UL communication with the second TRP, and the power offset may not be used to determine a cell-specific nominal UE transmission power for UL communication with the first TRP. The terminal may determine the cell-specific nominal UE transmission power by applying the power offset to Equation 4 or Equation 5, and may determine a final transmission power based on the cell-specific nominal UE transmission power. The terminal may perform UL communication with a TRP (e.g., the micro cell, the micro TRP, the second TRP) using the final transmission power. In other words, the terminal may determine a nominal UE transmission power (e.g., a cell-specific nominal UE transmission power) for the first TRP illustrated in FIG. 9 without applying the power offset, and the terminal may determine a nominal UE transmission power (e.g., a cell-specific nominal UE transmission power) for the second TRP illustrated in FIG. 9 by applying the power offset. Equation 2 and/or Equation 3 may be used to determine a nominal UE transmission power (e.g., a cell-specific nominal UE transmission power) for the first TRP illustrated in FIG. 9. Equation 4 and/or Equation 5 may be used to determine a nominal UE transmission power (e.g., a cell-specific nominal UE transmission power) for the second TRP illustrated in FIG. 9.

As another method, a power offset for each RSRP range may be preconfigured as shown in Table 2 below. Table 2 may be predefined in the technical specifications. In other words, Table 2 may be preconfigured in the terminal and/or the base station. The terminal may identify an RSRP range to which a measured RSRP belongs based on Table 2, may identify a power offset associated with the identified RSRP range, and may determine a cell-specific nominal UE transmission power by applying the identified power offset to Equation 4 or Equation 5. In the present disclosure, quality information other than RSRP (e.g., RSRQ, an RSRQ range, SINR, a SINR range) may be used instead of RSRP.

**[Table 2]**

| RSRP range | Power offset |
|---|---|
| First RSRP range | First power offset |
| Second RSRP range | Second power offset |
| ... | ... |
| Fifth RSRP range | Fifth power offset |

### 1-B. Method #2

A transmission power (e.g., a UL transmission power) may be determined based on a p0 value and an alpha value. The p0 value may be considered to determine a cell-specific nominal UE transmission power. The p0 value may be *P_{O_PRE}* in Equation 2 to Equation 5. The alpha value may be *α*_{*b*,*f,c*}(*j*) in Equation 1. The base station may configure (e.g., indicate) parameter set(s) including a plurality of p0 values and a plurality of alpha values for the terminal through signaling (e.g., RRC signaling). The terminal may receive the parameter set(s) including the plurality of p0 values and the plurality of alpha values through signaling from the base station. The base station may configure (e.g., indicate) a parameter set including a p0 value and an alpha value to the terminal through MAC CE and/or DCI. Alternatively, the base station may request the terminal to update a parameter set including a p0 value and an alpha value through MAC CE and/or DCI.

Generally, a parameter set may include one p0 value and one alpha value. In order to support an asymmetric TRP system, a parameter set may include a plurality of p0 values and a plurality of alpha values. The number of p0 values may be equal to the maximum number of TRPs supported by the terminal (e.g., the maximum number of TRPs performing communication with the terminal). Each of the plurality of p0 values may be associated with a corresponding TRP. For example, a first p0 value may be associated with the first TRP illustrated in FIG. 9, and a second p0 value may be associated with the second TRP illustrated in FIG. 9. The first p0 value and the second p0 value may be different from each other. Alternatively, the first p0 value and the second p0 value may be identical values. The number of alpha values may be equal to the maximum number of TRPs supported by the terminal (e.g., the maximum number of TRPs performing communication with the terminal). Each of the plurality of alpha values may be associated with a corresponding to TRP. For example, a first alpha value may be associated with the first TRP illustrated in FIG. 9, and a second alpha value may be associated with the second TRP illustrated in FIG. 9. The first alpha value and the second alpha value may be different from each other. Alternatively, the first alpha value and the second alpha value may be identical values.

The plurality of p0 values in the parameter set may be arranged in descending order or ascending order based on CORESET indexes or indicators (e.g., indexes) of SRS resource sets for the plurality of TRPs associated with the plurality of p0 values. The plurality of alpha values in the parameter set may be arranged in descending order or ascending order based on CORESET indexes or indicators (e.g., indexes) of SRS resource sets for the plurality of TRPs associated with the plurality of alpha values. Each of the plurality of p0 values and each of the plurality of alpha values may be associated with TCI state(s). For example, when the terminal performs communication with two TRPs and the terminal receives from the base station an indication (e.g., a request) for changing a TCI state for the second TRP among the two TRPs, the terminal may determine a cell-specific nominal UE transmission power using a second p0 value and a second alpha value in the parameter set. The indication for changing the TCI state for the second TRP may be '(TRP #1, TRP #2) = {(-), TCI state #m} when a joint type is configured'.

Configuration information for a nominal UE transmission power (e.g., a cell-specific nominal UE transmission power and/or a UE-specific nominal UE transmission power) transmitted by the base station to the terminal may include a parameter set including p0 values and alpha values corresponding to the maximum number of TRPs supported by the terminal. When one p0 value and one alpha value exist in the parameter set, the terminal may expect to use the one p0 value and the one alpha value to determine transmission powers for all TRPs. When a plurality of p0 values and a plurality of alpha values are included in the parameter set, the terminal may expect to determine transmission powers using the plurality of p0 values and the plurality of alpha values. In other words, the terminal may use each of the plurality of p0 values and each of the plurality of alpha values to determine a transmission power for each TRP.

### 1-C. Method #2-1

A base station may transmit configuration information for a nominal UE transmission power (e.g., a cell-specific nominal UE transmission power and/or a UE-specific nominal UE transmission power) to a terminal, and may transmit an activation command or a deactivation command to the terminal such that different value(s) included in the configuration information become valid during a specific duration. When the activation command for the configuration information for the nominal UE transmission power is received, the terminal may determine that the configuration information for the nominal UE transmission power is valid until a deactivation command for the configuration information for the nominal UE transmission power is received. The nominal UE transmission power may be interpreted as a cell-specific nominal UE transmission power and/or a UE-specific nominal UE transmission power depending on context.

Depending on the mobility of the terminal, the p0 value and/or the alpha value configured by Method #2 may be changed. In other words, the p0 value and/or the alpha value may need to be changed depending on the mobility of the terminal. The base station may configure (e.g., indicate) candidate parameter sets to the terminal through signaling (e.g., RRC signaling), and may transmit an indication and/or an activation command for one or more candidate parameter sets among the candidate parameter sets to the terminal through signaling (e.g., MAC CE and/or DCI). A candidate parameter set may include candidate p0 value(s) and candidate alpha value(s). MAC CE may be used for indication and/or activation of the candidate parameter set(s). A field included in the MAC CE may indicate a codepoint for the indicated (e.g., activated) candidate parameter set(s). One codepoint may be associated with one parameter set (e.g., one parameter set ID). When a plurality of codepoints are indicated by the MAC CE, the terminal may expect that p0 value(s) and alpha value(s) configured through RRC signaling are not changed until separate indication by DCI is received.

When a single codepoint is activated by the MAC CE, the terminal may interpret the activation of the single codepoint as an indication to use (e.g., an update indication). Accordingly, the terminal may update an existing parameter set (e.g., an existing parameter set ID) configured through RRC signaling to the parameter set (e.g., a parameter set ID) associated with the codepoint indicated through the MAC CE, and may determine a transmission power based on the updated parameter set.

The base station may transmit, to the terminal, DCI including information indicating a codepoint associated with at least one parameter set among parameter sets activated by MAC CE. The terminal may identify the at least one parameter set associated with the codepoint based on the information included in the DCI received from the base station. The base station may transmit MAC CE including time information to the terminal. The terminal may identify the time information included in the MAC CE received from the base station. The time information may be configured in units of slots, subframes, or system frames. When a parameter set is activated by MAC CE, the terminal may determine that the parameter set is valid during a duration indicated by the time information. In other words, the terminal may expect that the parameter set activated by MAC CE is deactivated after the duration indicated by the time information.

When the activated parameter set becomes deactivated, the terminal may expect to configure a transmission power using a parameter set (e.g., a default parameter set) configured by previous RRC signaling. In order to support the above-described operation, the base station may preconfigure the default parameter set for the terminal through signaling. The terminal may transmit information indicating whether the terminal supports the above-described operation to the base station in advance. The base station may perform a signaling procedure for the above-described operation based on the information received from the terminal.

### 1-D. Method #2-2

The base station may configure (e.g., indicate) path loss RSs associated with each of a plurality of p0 values and a plurality of alpha values, which are used as configuration information for transmission power determination, to the terminal. The plurality of p0 values and the plurality of alpha values may be configured based on Method #2. Path loss RSs used for configuration of the plurality of alpha values (e.g., the path loss RS between the first TRP illustrated in FIG. 9 and the terminal) may be identical, but the terminal may apply correction values corresponding to different path loss RSs to the plurality of alpha values. The correction for the different path loss RSs may be performed using correction values derived from measurement results of the different path loss RSs. The above-described method may be applied when the terminal receives a DL signal from UL mTRP. UL mTRP may refer to mTRP performing UL communication with the terminal. The base station may configure (e.g., indicate) RSs (e.g., path loss RSs) of the respective TRPs for the terminal by transmitting not only the path loss RSs but also physical cell identifiers (PCIs) to the terminal. The terminal may receive the path loss RSs and the PCIs from the base station. Each of the path loss RSs may be associated with a corresponding PCI. The path loss RS may refer to an RS used to measure path loss. The path loss RS may include SSB, CSI-RS, DM-RS, SRS, and the like.

### 2. Case 2: PUSCH power control adjustment state (e.g., f_{b,f,c}(i,l))

A power control adjustment state (e.g., a PUSCH power control adjustment state) may be configured based on a transmit power command (TPC) included in DCI. The TPC may refer to a TPC field, a value of the TPC field, or a TPC value. To determine the PUSCH power control adjustment state, a transmission power used for a previous transmission may be considered. Hereinafter, enhancement techniques for a PUSCH power control adjustment state in an asymmetric TRP system are described.

### 2-A. Method #3

The terminal may configure a transmission power by applying a PUSCH power control adjustment state for each TRP of UL mTRP. In other words, the terminal may independently determine a first PUSCH power control adjustment state for the first TRP illustrated in FIG. 9 and a second PUSCH power control adjustment state for the second TRP illustrated in FIG. 9. The terminal may transmit to the base station information indicating whether the terminal supports application of the PUSCH power control adjustment state for each TRP of UL mTRP. The terminal may transmit information on the number N of PUSCH power control adjustment states supported by the terminal to the base station. N may be a natural number. N may be equal to the number of TRPs supported by the terminal. The information may be included in a UE capability report.

The base station may identify whether the terminal supports application of a PUSCH power control adjustment state for each TRP of UL mTRP based on the information received from the terminal. In addition, the base station may identify the number N of PUSCH power control adjustment states supported by the terminal. When the terminal supports the application operation of a PUSCH power control adjustment state for each TRP of UL mTRP, the base station may transmit to the terminal DCI including TPCs corresponding to PUSCH power control adjustment states for UL mTRP. The terminal may receive the DCI from the base station and may identify the TPCs included in the DCI. Each of the TPCs included in the DCI may be associated with the PUSCH power control adjustment state for each TRP of UL mTRP. For example, the DCI may include a first TPC for the first TRP and a second TPC for the second TRP.

When the terminal reports to the base station that the terminal supports N PUSCH power control adjustment states, bits corresponding to N TPCs in the DCI may be used to indicate TPCs for the N PUSCH power control adjustment states. N may be equal to the maximum number of TRPs supported by the terminal. For example, when the size of the TPC is 2 bits and the terminal is capable of performing communication with two TRPs, 4 bits in the DCI may be allocated to indicate TPCs for two PUSCH power control adjustment states.

The TPCs for the PUSCH power control adjustment states in the DCI may be mapped in descending or ascending order of indexes *j*. The TPCs for the PUSCH power control adjustment states in the DCI may be mapped based on the most significant bit (MSB) or the least significant bit (LSB). The TPCs may be associated with TCI state(s). For example, a first TPC may be associated with a first TCI state for the first TRP, and a second TPC may be associated with a second TCI state for the second TRP. In this case, the TPCs for the PUSCH power control adjustment states in the DCI may be mapped in descending or ascending order of TCI state(s) configured by codepoints. The TPCs for the PUSCH power control adjustment states may be associated with an SRS resource indicator (SRI) field.

### 2-B. Method #3-1

The base station may indicate (e.g., configure) whether N PUSCH power control adjustment states are to be used to the terminal through signaling (e.g., MAC CE and/or DCI). The terminal may identify the number of PUSCH power control adjustment states to be used based on the indication from the base station and may determine transmission power(s) based on the identified number. The base station may transmit, to the terminal through signaling, information on a time duration during which the N PUSCH power control adjustment states are applied. The terminal may receive the information on the time duration through signaling from the base station. The terminal may determine that the N PUSCH power control adjustment states are applied during the time duration indicated by the base station.

The base station may have flexibility in configuring use of the PUSCH power control adjustment states. For example, even when the terminal supports two PUSCH power control adjustment states, the base station may determine the number of PUSCH power control adjustment states supported by the base station differently from the number supported by the terminal. To reduce decoding overhead, the base station may transmit information for reducing decoding overhead to the terminal through signaling (e.g., MAC CE) before the terminal performs a DCI reception operation (e.g., a blind decoding operation). The terminal may receive the information for reducing decoding overhead through signaling from the base station.

For example, the base station may indicate, to the terminal, whether DCI transmitted after the MAC CE includes N TPCs (e.g., TPCs associated with N PUSCH power control adjustment states) using a 1-bit indicator in the MAC CE. To indicate whether the DCI includes N TPCs, different RNTIs may be introduced. For example, first DCI having cyclic redundancy check (CRC) scrambled by a first RNTI may include N TPCs. Second DCI having CRC scrambled by a second RNTI may not include N TPCs. In other words, the second DCI having CRC scrambled by the second RNTI may include one TPC.

Time information indicating a duration in which N PUSCH power control adjustment states are applied may be configured. The base station may transmit the time information to the terminal through signaling. The terminal may receive the time information through signaling from the base station. The terminal may determine that N PUSCH power control adjustment states are applied during the duration indicated by the time information. The time information may be configured in units of slots, subframes, or system frames. The number of PUSCH power control adjustment states applied during the duration indicated by the time information may be indicated by information included in the MAC CE. The terminal may predict the size of TPC(s) included in the DCI based on the information included in the MAC CE.

The base station may explicitly inform the terminal, through MAC CE, of information on a PUSCH (e.g., a scheduled PUSCH) associated with a plurality of TPCs in the DCI. N fields in the DCI may be used to indicate N TPCs. When a specific TPC in the DCI has a null value, the terminal may determine a PUSCH power control adjustment state for a PUSCH occasion *i* (e.g., a current PUSCH occasion) based on a TPC for a PUSCH occasion *i* - 1 (e.g., a previous PUSCH occasion). Alternatively, when a specific TPC in the DCI has a null value, the terminal may determine a PUSCH power control adjustment state based on another TPC included in the DCI (e.g., the same DCI).

### 2-C. Method #3-2

The base station may configure (e.g., indicate), for the terminal, whether a TPC accumulation operation is to be performed using MAC CE or DCI instead of RRC signaling. In the asymmetric TRP system, a communication target may be a terminal located at a cell edge, and communication in the asymmetric TRP system may be sensitive to the mobility of the terminal. The base station may basically indicate whether to enable or disable the TPC accumulation operation to the terminal through RRC signaling. In addition, based on determination of the base station, the base station may dynamically configure (e.g., indicate), to the terminal, enable or disable of the TPC accumulation operation using MAC CE or DCI instead of RRC signaling. A 1-bit indicator in the MAC CE or the DCI may be used to indicate whether the TPC accumulation operation is enabled or disabled. The same DCI may include information indicating whether the TPC accumulation operation is enabled or disabled and one or more TPCs. The same DCI may include scheduling information for PUSCH transmission. The TPC accumulation operation may refer to accumulation of TPCs (e.g., values of the TPCs).

The exemplary embodiments proposed in the present disclosure may be applied not only to grant-based PUSCH transmission but also to grant-free PUSCH transmission, configured grant (CG)-based PUSCH transmission, and/or semi-persistent scheduling-based PUSCH transmission. The exemplary embodiments proposed in the present disclosure may be applied not only to a licensed band but also to an unlicensed band. The exemplary embodiments proposed in the present disclosure may be applied to determination of SL transmission power and/or supplementary uplink (SUL) transmission power. The exemplary embodiments proposed in the present disclosure may be applied not only to power control for UL-SCH (e.g., PUSCH) transmission but also to transmission power control for other uplink signals/channels (e.g., SRS, PUCCH) for an activated serving cell.

The terminal may transmit information indicating whether the terminal supports the function(s) proposed in the present disclosure to the base station. For example, in a UE capability reporting procedure, the terminal may transmit information indicating whether the terminal supports the function(s) proposed in the present disclosure to the base station. The base station may identify the function(s) supported by the terminal based on the information received from the terminal. The base station may perform signaling and operations based on the function(s) supported by the terminal (e.g., UE capability).

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a user equipment (UE), the method comprising:
receiving, from a base station, downlink control information (DCI) including a first transmit power control (TPC) field and a second TPC field;
determining a first power control adjustment state based on a first value of the first TPC field;
determining a second power control adjustment state based on a second value of the second TPC field;
performing first uplink (UL) communication with a first transmission and reception point (TRP) using a first transmission power determined based on the first power control adjustment state; and
performing second UL communication with a second TRP using a second transmission power determined based on the second power control adjustment state.

2. The method of Claim 1, further comprising: transmitting, to the base station, information indicating whether the UE supports determining a power control adjustment state for each of the first TRP and the second TRP.

3. The method of Claim 1, wherein the first TPC field is associated with a first transmission configuration indicator (TCI) state for the first TRP, and the second TPC field is associated with a second TCI state for the second TRP.

4. The method of Claim 1, wherein the DCI further includes information indicating whether to enable or disable an accumulation operation of TPCs.

5. The method of Claim 1, wherein the first transmission power for the first TRP is determined further based on a first nominal transmission power, the second transmission power for the second TRP is determined further based on a second nominal transmission power to which a power offset is applied, and the power offset is not applied to the first nominal transmission power.

6. The method of Claim 5, further comprising: receiving, from the base station, information on the power offset,
wherein the power offset indicated by the base station is applied to the second nominal transmission power.

7. The method of Claim 5, further comprising:
performing a measurement operation for a reference signal received from the first TRP; and
determining the power offset corresponding to a measurement result of the reference signal,
wherein the power offset determined by the UE is applied to the second nominal transmission power.

8. The method of Claim 5, further comprising: receiving, from the base station, a first p0 value and a second p0 value,
wherein the first nominal transmission power for the first TRP is determined based on the first p0 value, and the second nominal transmission power for the second TRP is determined based on the second p0 value.

9. The method of Claim 1, further comprising: receiving, from the base station, a first alpha value and a second alpha value,
wherein the first transmission power for the first TRP is determined further based on the first alpha value, and the second transmission power for the second TRP is determined further based on the second alpha value.

10. The method of Claim 1, wherein downlink (DL) communication for the UE is performed with a single TRP corresponding to the first TRP, UL communication for the UE is performed with multiple TRPs including the first TRP and the second TRP, and a path loss considered to determine the first transmission power and the second transmission power is a path loss between the UE and the first TRP.

11. A user equipment (UE) comprising at least one processor, wherein the at least one processor causes the UE to perform:
receiving, from a base station, downlink control information (DCI) including a first transmit power control (TPC) field and a second TPC field;
determining a first power control adjustment state based on a first value of the first TPC field;
determining a second power control adjustment state based on a second value of the second TPC field;
performing first uplink (UL) communication with a first transmission and reception point (TRP) using a first transmission power determined based on the first power control adjustment state; and
performing second UL communication with a second TRP using a second transmission power determined based on the second power control adjustment state.

12. The UE of claim 11, wherein the at least one processor further causes the UE to perform: transmitting, to the base station, information indicating whether the UE supports determining a power control adjustment state for each of the first TRP and the second TRP.

13. The UE of claim 11, wherein the first TPC field is associated with a first transmission configuration indicator (TCI) state for the first TRP, and the second TPC field is associated with a second TCI state for the second TRP.

14. The UE of claim 11, wherein the DCI further includes information indicating whether to enable or disable an accumulation operation of TPCs.

15. The UE of claim 11, wherein the first transmission power for the first TRP is determined further based on a first nominal transmission power, the second transmission power for the second TRP is determined further based on a second nominal transmission power to which a power offset is applied, and the power offset is not applied to the first nominal transmission power.

16. The UE of claim 15, wherein the at least one processor further causes the UE to perform: receiving, from the base station, information on the power offset,
wherein the power offset indicated by the base station is applied to the second nominal transmission power.

17. The UE of claim 15, wherein the at least one processor further causes the UE to perform:
performing a measurement operation for a reference signal received from the first TRP; and
determining the power offset corresponding to a measurement result of the reference signal,
wherein the power offset determined by the UE is applied to the second nominal transmission power.

18. The UE of claim 15, wherein the at least one processor further causes the UE to perform: receiving, from the base station, a first p0 value and a second p0 value,
wherein the first nominal transmission power for the first TRP is determined based on the first p0 value, and the second nominal transmission power for the second TRP is determined based on the second p0 value.

19. The UE of claim 11, wherein the at least one processor further causes the UE to perform: receiving, from the base station, a first alpha value and a second alpha value,
wherein the first transmission power for the first TRP is determined further based on the first alpha value, and the second transmission power for the second TRP is determined further based on the second alpha value.

20. The UE of claim 11, wherein downlink (DL) communication for the UE is performed with a single TRP corresponding to the first TRP, UL communication for the UE is performed with multiple TRPs including the first TRP and the second TRP, and a path loss considered to determine the first transmission power and the second transmission power is a path loss between the UE and the first TRP.
